# EUROPEAN PATENT APPLICATION

(11) **EP 1 380 989 A2**
(43) Date of publication of application: **14.01.2004**
(21) Application number: 03394059.4
(22) Date of filing: 02.07.2003
(51) Int. Cl.: G06K 17/00, G06K 7/10, G11B 23/00

(54) **An optical media handling system**

(30) Priority: 03.07.2002 IE 20020549; 27.03.2003 US 457571
(71) Applicant: Bronway Research Limited, Bray, County Wicklow (IE)
(72) Inventor: O'Malley, Martin, Dun Laoghaire, Co. Dublin (IE); Ramsden, Peter, St. Neots, Cambridgeshire PE19 8EL (GB); Sanby, Chris, Blisworth, Northamptonshire NN7 3DN (GB); Bland, Antony, Sharnbrook, Bedfordshire MK44 1PS (GB); Dolan, Martin, Enniskerry, Co. Wicklow (IE); McEntee, Sean, Dublin 6W (IE)
(74) Representative: O'Brien, John Augustine

(57) **Abstract**

An optical medium identification system for identifying an optical medium comprises an imaging apparatus for acquiring an image of an identifier of the optical medium, and an image processing system 12. The optical medium identification system comprises a database 15. The image processing system includes function for decoding the identifier and a function for automatically setting operating parameters during an initialisation stage using a sample optical medium identifier. The imaging apparatus 51 for acquiring an image of an identifier such as a barcode or text on an optical medium such as a disc 2 comprises a bottom section 3 and a top section 4. The top section 4 contains a holder for supporting a disc 2 without occluding the disc identifier and the bottom section 3 contains a camera 5 facing upwardly for taking an image of the identifier. The holder is a vacuum disc holding system comprising a disc support in the form of a vacuum cup 10 and a chamber 11 from which a vacuum is applied to the cup 10 through conduits 12.

## Description

### Introduction

The invention relates to an optical medium or disc identification system.

Optical media are commonly in the form of discs. In this specification references to optical media include any type of optical media or discs but are not limited to any of CD, CD-R, CD-RW, DVD, DVD-R, DVD-RW, DVD + RW, business card CD/DVD, 80mm CD/DVD, 65mm CD/DVD, FMD and all other media for storing or retrieving data of whatever nature, using optical methods or techniques.

In automated systems it is important to be able to identify a particular disc during disc handling processes for example during manufacture, sorting, or auditing processes. Such a system would be particularly useful in mechanical handling systems for the discs in which high speeds of operation and high throughput are required.

One current approach is to use an imaging device such as a barcode reader to read an identifier from a disc. Identifiers are commonly mastered onto a disc at the time of manufacture. The barcode reader is configured in advance of a production run to enable it to read a specific identifier of interest. Such a system has the disadvantages that prior knowledge of the type of disc and disc identifier that is to be read is required to enable configuration of the reader. Thus scan failures are noted when the system fails to read an identifier whether because of true scan failure such as a scanner error or manufacturing problem, or because the identifier is different from the one that the reader has been configured to read. In addition discs may be unnecessarily rejected even if they bear an alternative valid identifier code.

The invention addresses these problems.

### Statements of Invention

According to the invention there is provided an optical medium identification system for identifying an optical medium comprising:
an imaging apparatus for acquiring an image of an identifier of the optical medium, and
an image processing system.

In one embodiment the image processing system comprises a function for decoding the identifier.

In another embodiment the image processing system comprises a database for storing optical medium identifiers including a list of valid optical medium identifiers, and a function for comparing an identifier of an optical medium with the identifiers stored in the database.

In a further embodiment the image processing system comprises a user interface, a function for passing a medium identifier not matched in the database to the interface for output to a user, and a function for rejecting the medium if the user interface does not receive a user verification input for the identifier.

In one embodiment the database comprises at least two indexes, and a search function attempts to match a medium identifier using the indexes in succession and terminates a search if a match is found before using all indexes.

In another embodiment the image processing system comprises a function for automatically setting operating parameters during an initialisation stage using a sample optical medium identifier.

In a further embodiment said function determines said operating parameters from data read from an optical medium sample of the batch.

In one embodiment the image processing system comprises functions for locating the centre of an optical medium, for adjusting the imaging apparatus brightness and contrast, for detecting an optical medium identifier, and for detecting the radius of the identifier.

In another embodiment the image processing system automatically re-initialises and the operating parameters are adjusted using a current optical medium as an initialisation sample if the system encounters difficulty in reading the identifier of the current optical medium using the current operating parameters.

In a further embodiment the imaging apparatus comprises a holder for supporting the optical medium without occluding the identifier and a camera for acquiring an image of the identifier.

In a one embodiment the holder comprises a vacuum holding system.

In another embodiment the vacuum holding system comprises an optical medium support and a chamber from which a vacuum is applied to the optical medium support

In a further embodiment the chamber located between the optical medium support and the camera does not occlude the field of view of the camera at the optical medium identifier.

In one embodiment the optical medium support is a vacuum cup.

In another embodiment the vacuum cup is engageable with a centre section of an optical medium.

In a further embodiment the vacuum cup is an annular cup.

In one embodiment the vacuum cup defines a central opening for a spindle.

In another embodiment the chamber does not occlude an optical path between the camera and the optical medium identifier.

In a further embodiment the chamber comprises top and bottom walls of glass or other material transparent to the camera detection wavelength.

In one embodiment the chamber is an annular chamber.

In another embodiment conduits communicating between the chamber and the optical medium support and the conduits being located outside of the optical path are provided.

According to another aspect of the invention there is provided a method for identifying an optical medium or optical medium, comprising the steps of:
acquiring an image of an identifier of an optical medium
reading the identifier
checking the validity of the identifier.

In one embodiment checking the validity of the identifier comprises the step of comparing the identifier with a database of identifier data.

In another embodiment checking the validity of the identifier comprises the step of presenting the identifier at a user interface for review by an operator, and rejecting the medium if the user interface does not receive a verification input for the identifier.

In a further embodiment the optical medium has an inner mirror band and the identifier is located on the mirror band and the method further comprises the steps of:
locating the centre of the optical medium,
locating the inner mirror band,
locating the identifier, and
locating the radius of the identifier.

In one embodiment the method comprises a step of adjusting the parameters of the imaging apparatus to optimise the image of the identifier.

In another embodiment content of the inner mirror band is scanned and the gain and offset of the incoming video signal is adjusted to optimise the contrast of the image and the content of the inner mirror band is scanned and the exposure time of the image sensor is adjusted to optimise the contrast of the image.

According to a further aspect of the invention there is provided an apparatus for acquiring an image of an identifier of an optical medium, the apparatus comprising a holder for supporting the optical medium without occluding the identifier and a camera for acquiring an image of the identifier.

In one embodiment the holder comprises a vacuum holding system.

In another embodiment the vacuum holding system comprises an optical medium support and a chamber from which a vacuum is applied to the optical medium support

In a further embodiment the chamber located between the optical medium support and the camera does not occlude the field of view of the camera at the optical medium identifier.

In one embodiment the optical medium support is a vacuum cup.

In another embodiment the vacuum cup is engageable with a centre section of an optical medium.

In a further embodiment the vacuum cup is an annular cup.

In one embodiment the vacuum cup defines a central opening for a spindle.

In another embodiment the chamber does not occlude an optical path between the camera and the optical medium identifier.

In a further embodiment the chamber comprises top and bottom walls of glass or other material transparent to the camera detection wavelength.

In one embodiment the chamber is an annular chamber.

In another embodiment conduits communicating between the chamber and the optical medium support said conduits being located outside of the optical path are provided.

### Brief Description of the Drawings

The invention will be more clearly understood from the following description thereof given by way of example only, in which:-
Fig. 1 is an illustration of a disc identification system of the invention installed in a disc handling facility.
Fig. 2 is a block diagram illustrating a disc identification system of the invention;
Fig. 3 is a flow diagram illustrating the steps of a method for initialising the disc identification system;
Fig. 4 is a flow diagram illustrating steps of a method for identifying discs using the disc identification system; and
Fig. 5 is a perspective view of an imaging apparatus according to the invention;
Fig. 6 is a cross sectional view of the apparatus of Fig. 5;
Fig. 7 is a cross sectional view on an enlarged scale of an upper portion of the apparatus;
Fig. 8 is a further enlarged cross sectional view of a central section of the apparatus of Fig. 7; and
Fig. 9 is an exploded perspective view of the upper portion of the apparatus;

### Detailed Description

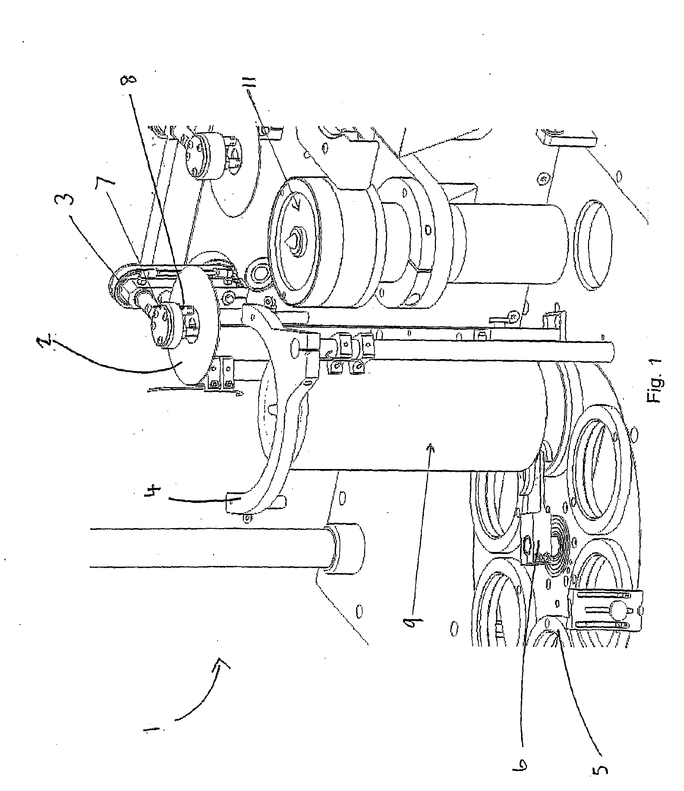

Referring to Fig. 1 a section of a disc processing line 1 is illustrated. The disc processing line 1 comprises a disc handling system 3 and a disc imaging apparatus 11. Incoming discs are presented on a spindle 9 of 100, 150 or other quantity of discs. The handling system 3 comprises an arm 7 for conveying discs 2 from the spindle 9 to the imaging apparatus 11. A disc 2 is lifted from the spindle disc stack by means of suction cups 8 provided on the underside of the head of the arm 7. The imaging apparatus 11 captures an image of an identifier code such as a barcode imprinted on the disc 2. When the imaging operation is complete the disc is removed from the imaging apparatus. The processing line 1 comprises a buffer 5 for supporting spindle stacks and a lifting arm 6 for lifting the disc stack. An air -blow 4 is provided to separate discs as they are removed from the spindle since discs in a disc stack may stick to each other. The imaging apparatus 11 is part of a disc identification system 10.

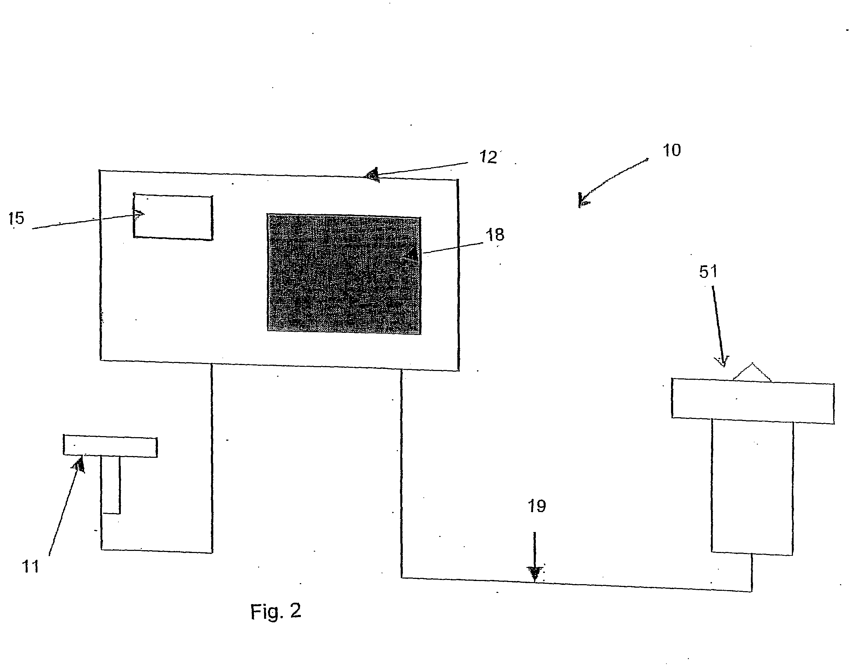

Referring to Fig. 2 the disc identification system 10 comprises the imaging apparatus 11 and another imaging apparatus 51 both connected to an image processing system 12 by camera cables 19. The image processing system 12 comprises image processing functions. The system also comprises a database 15 and a user interface 18.

The system 10 is installed in a production line to identify discs passing through at key stages in the manufacturing, fulfillment and distribution processes, for example, at the time of replication, during printing and during packaging. Large disc manufacturing orders are often divided between several production facilities. For example, replication may be performed at more than one site and the replicated discs transferred to another site for printing and packaging. The discs are thus monitored at each stage of manufacturing to ensure that only discs of the correct type are present in a batch order.

As noted above, all pre-recorded optical media or discs bear a unique identifier code that is mastered on the inner mirror band of the disc at the time of manufacture. Discs of a particular production batch generally bear a common identifier code, but if the discs making up a production batch are manufactured at different sites the complete batch will often include discs bearing different identifier codes. Valid identifier data is supplied to enable the process of performing disc identification. The identifier data may be provided in electronic format for uploading to the disc identification system database 15, or in a form that may be manually accessed by an operator.

The database 15 is used to store, in the disc identification system, details of valid disc identifier data relating to the current production job. The valid disc identifier data may be entered in different ways including, for example the following:
1. identifier data may be uploaded, prior to a production run, to the database 15 from a manufacturing facility database which stores batch and production data
2. identifier data may be entered manually by an operator prior to a production run
3. identifier data may be entered during initialisation, based on the identifier code or codes read and decoded from a sample disc or discs
4. identifier data may be entered as and when a new identifier is approved by an operator or supervisor during a production run. If a user approves a new identifier then they may, if authorised, enter the new identifier into the database 15. The user would normally verify the identifier against a pre-supplied list, or other database of valid identifiers.

Depending on how the system 10 is configured it may also be possible to upload a set of valid alternative identifier data upon identification of the identifier on the sample disc. The database comprises a two stage indexing structure of identifier data, a primary index which is initially used for scans to check the validity of identifier data, and a larger secondary index which is used if a match for the identifier is not found in the first scan using the primary index. The primary index addresses identifiers for one or more sample discs for a batch of discs and valid alternatives. The secondary addresses valid alternative data.

In operation, the system 10 takes an image of the identifier code, decodes the code and checks it against the identifier data stored in the database to check if it is valid for the current production batch. There are two channels used for checking the identifier against the identifier data stored in the database: a first channel using primary index and a second channel using the secondary index. The use of two indexes provides for improved performance and efficiency of operation in checking identifiers. The primary index is of smaller size and may be checked with high speed while the larger secondary index is only used if required.

In cases where a decoded identifier is not present in the database 15 it is presented to the user at the user interface 18 for confirmation that it is valid for the current batch. In deciding that a code is invalid the system reinitialises and tries again to read the identifier with different imaging characteristics and parameter values.

In each case the image target is a disc identifier code.

Various types of identifier codes are used in the industry, for example, barcodes or other text or alphanumeric codes. The identifier codes are normally located in the mirror band of a disc.

The system 10 is initialised for each production run to adjust and optimise the imaging parameters depending on the type of identifier code to be imaged and the location of the identifier and mirror band on a particular disc. Initialisation involves placing a sample disc from the production batch onto the imaging apparatus 11 or 51 and performing a disc identification operation.

As part of the initialisation, the disc identification system 10 parameters are automatically adjusted as follows:
- setting the system to image the selected region of interest (i.e. the mirror band of the disc)
- setting the imaging parameters according to the attributes of the relevant identifier code to ensure that high quality images of the specified identifier code are obtained,

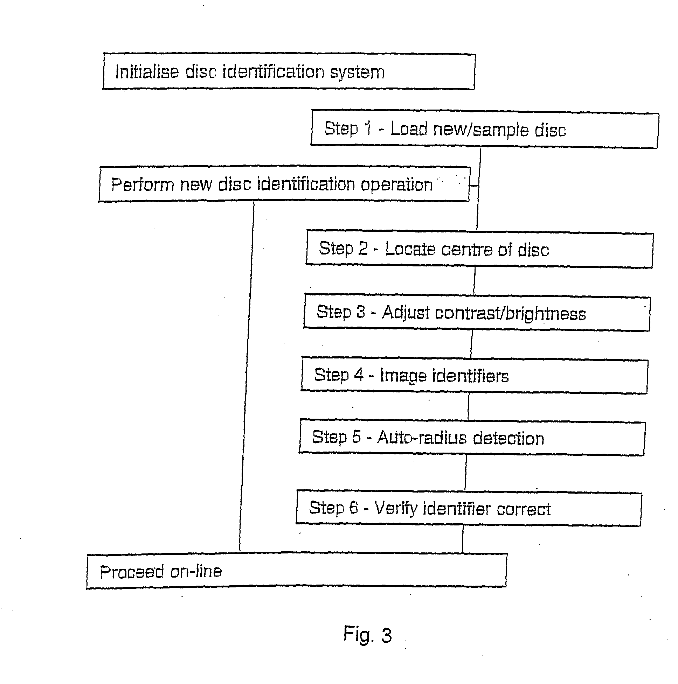

Referring to Fig. 3 steps of a method for initialising the disc identification system 10 and performing a disc identification operation are described.

Step 1 A sample disc 2 from the production batch is inserted onto the imaging apparatus 11 or 51. An image is captured and processed for use in initialisation and setting the disc identification system.

Step 2 The centre of the disc 2 is located by means of two or more edge detectors comprising edge scan windows in the region where the centre of the disc is expected to be located. The edge detectors detect the change of grey level intensity between the data area of the disc and the inner mirror band. Typically the system will tolerate +/- 2mm of misplacement by a handling unit but this is determined by the size of the edge scan window and can be increased or decreased, if required. The edge location positions determined from each of the scans are used to determine the disc centre.

Step 3 Auto brightness/contrast determination ― The visual contrast of the identifier code in the inner mirror band can vary substantially for example, by an order of magnitude, from one title to another depending on the way in which the disc has been mastered. The data pit size, shape and spacing all have a bearing on the contrast of the identifier. If there is insufficient visual contrast, or if there is too much and the image becomes saturated, then the code cannot be read. An image processing function controls the imaging apparatus to scan the content of the inner mirror band and then either adjusts the gain and offset of the incoming video signal or adjusts the exposure time of the image sensor in order to optimise the contrast of the pixels contained within the inner mirror band.

Step 4 Detect identifiers - Automatic detection of identifiers, for example, barcode symbol or other text or alphanumeric code. Once the location of the mirror band has been determined and the contrast has been optimised the mirror band is scanned circumferentially for the presence of any of the supported barcode formats. If a barcode is not detected then the system will search for the presence of an alphanumeric code. The character recognition capability is font specific and so the system will apply each of the known fonts that reside in its memory to try to decode the alphanumeric identifier code. Should the system fail to recognise the identifier code it will default to a supervision mode. This will allow the operator to position a region of interest around the identifier code and the system will automatically generate a reference character set for the characters contained within this region of interest.

Step 5 Auto-radius detection ― Once the identifier code has been determined the system will continue to perform concentric, circumferential scans based on a diminishing radius. This approach allows determination of the outer and inner radius of the code. If the inner radius is detected before the inner radius of the mirror band, then the system will automatically scan for the presence of a second code comprising the same symbols. If a second code is detected the auto-radius detection function will continue in order to determine the inner and outer radius of the second code.

Step 6 Code Validation - The identifier code that has been identified by the system 10 is verified either automatically against the list of valid identifier codes stored in the in the database 15 or manually by presentation at the user interface 68 to an operator for confirmation.

The mode of verification is selected according to customer requirements and depends on the implementation of a supervisory control system being present in the disc manufacturing facility. As described in step 6 above, the mode of verification may comprise displaying an image of the relevant identifier for an operations supervisor to review or may alternatively be an automated mode of verification.

The system proceeds on-line to begin production if there is positive confirmation that the identifier code on the sample disc (the reference identifier) is a valid identifier for the current batch run. The identifier code on the sample disc is noted into the database 15 as the reference identifier for the current production batch. Once the reference identifier on the sample disc has been decoded and identified and the system parameters set in accordance with Steps 1-6 above, then successive discs are scanned using the same parameters. This minimises the scan time requirements.

If in the process of identifying a batch of discs, the disc identification system fails to read or to positively identify a disc as having the same identifier code (the reference identifier) that the system has been set up to read, then it will treat that unidentified disc as a new sample disc (with a new reference identifier). The process of identifying a batch of discs is interrupted, and the unidentified disc is retained on the imaging apparatus and the system will repeat the initialisation and imaging parameter setting process (steps 1 ― 5 above) and try to read the disc with the imaging parameters optimised. When the identifier is read the system will then perform the identifier decoding and verification steps (step 6 above).

The disc identification system does not require any prior knowledge of the disc in order to identify it, because during the initialisation process the system parameters are changed as required to read and positively identify any disc. No information on the format of the identifier code is required because the system automatically checks for the presence of a barcode or other code format such as an alphanumeric code.

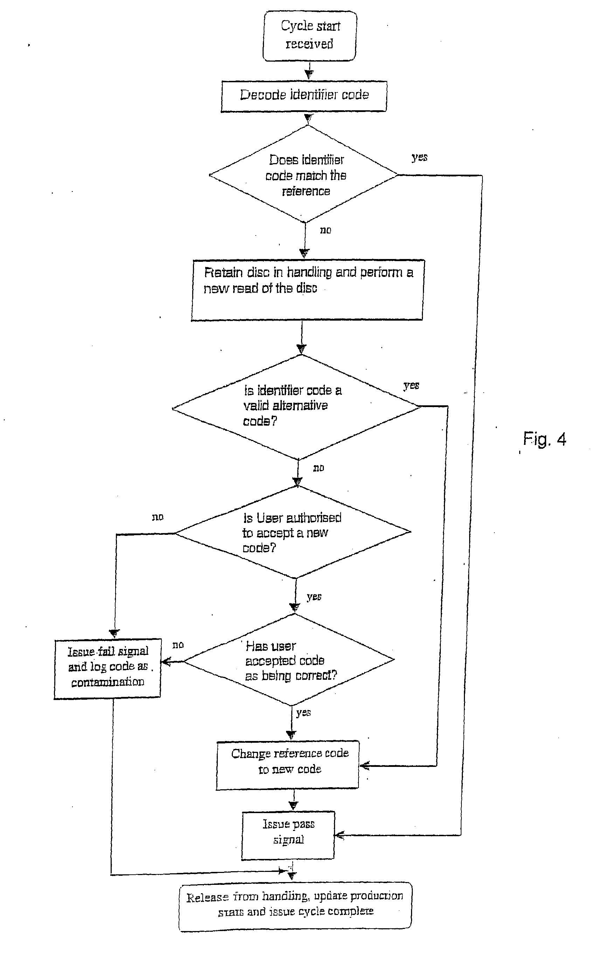

The following steps of a method for monitoring and identifying discs during a production run, and alternative procedures followed depending on the outcome of the identification are described with reference to Fig. 4.

Initialisation. A disc is placed on an imaging apparatus 11 or 51

The system 10 performs a new disc identification operation to read and decode the disc identifier and positively identify the disc.

The disc identifier is compared with the list of valid identifiers stored in the database 15 in order to verify that the disc belongs to the current production batch.

If the identifier code is correctly verified and the disc is valid, the system issues a pass signal and the disc is removed from the reader to rejoin the production process. The identifier is noted in the system as the main reference identifier for the batch. The system proceeds to identify and verify successive discs.

If the identifier is not correctly verified, the production process is interrupted. The disc is retained on the reader and the system 10 performs a new disc identification operation to image, read and decode the new identifier in order to determine the identification of the disc.

The identifier is compared with the list of valid identifiers entered into the database system 15 prior to or during initialisation or on approval of an operator during the production run.

If the identifier is found to be valid and to match one of the alternative identifier codes stored in the database 15, then the machine accepts the disc and proceeds to verify the next disc.

If the identifier is not in the database 15 then depending on the mode of operation:
The disc is either displayed to be manually verified by an operator or
The system automatically rejects the disc, removes the disc from the batch and proceeds to identify the next disc. The system will raise an alarm condition to indicate that contamination has been detected.

If the operator verifies that the disc is valid then the disc passes the verification requirement.

The system is set up according to the manufacturer requirements. Different modes of the manual disc identification operation may be implemented. Depending on their level of authorisation, an operator may be able to add a new identifier of a disc that is presented for verification, to the list of valid identifiers for a particular production batch.

Different levels of security may be implemented, for example, to enable only a supervisor to add a new identifier to the database of valid identifier data. Security is implemented for example, by enabling only password-protected access to the database.

The system maintains a log of the discs of each production batch that passes through. The log includes details of the total number of discs, the number of reject discs, any failed attempts to read a disc identifier, production statistics and details of contamination. In the case that contamination is detected the relevant identifier code is recorded in the production statistics file together with the time and date of detection.

Based on the results of identification of the image of the identifier taken by the imaging apparatus, the system proceeds to one of the following:
- identify that the disc bears the correct identifier
- identify that the disc has the wrong identifier code
- scan failure, the camera is unable to read the disc due to a manufacturing problem or other shortcomings of the scanner or mechanical handling.

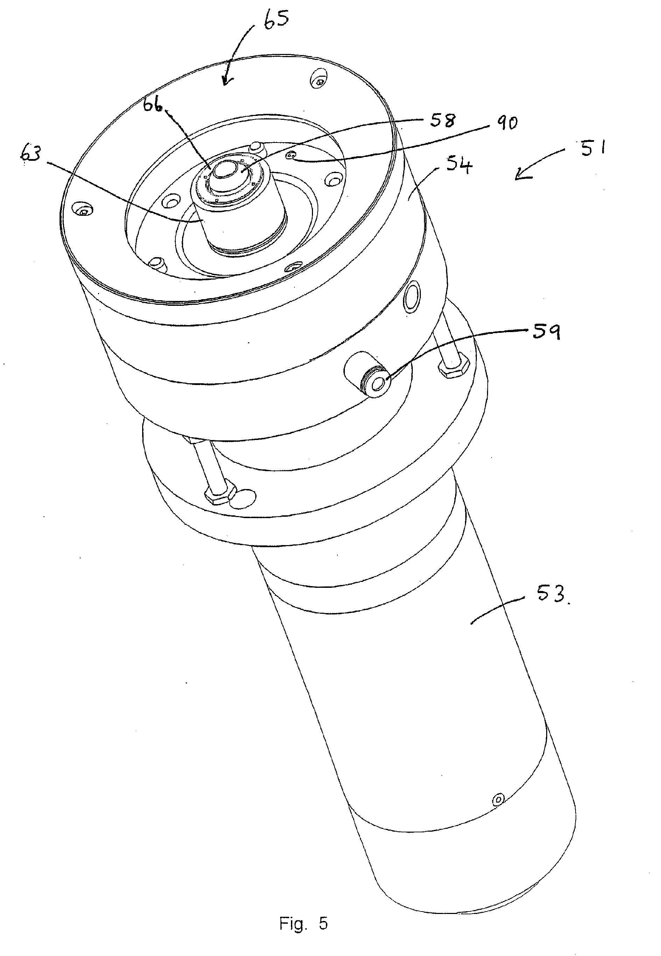

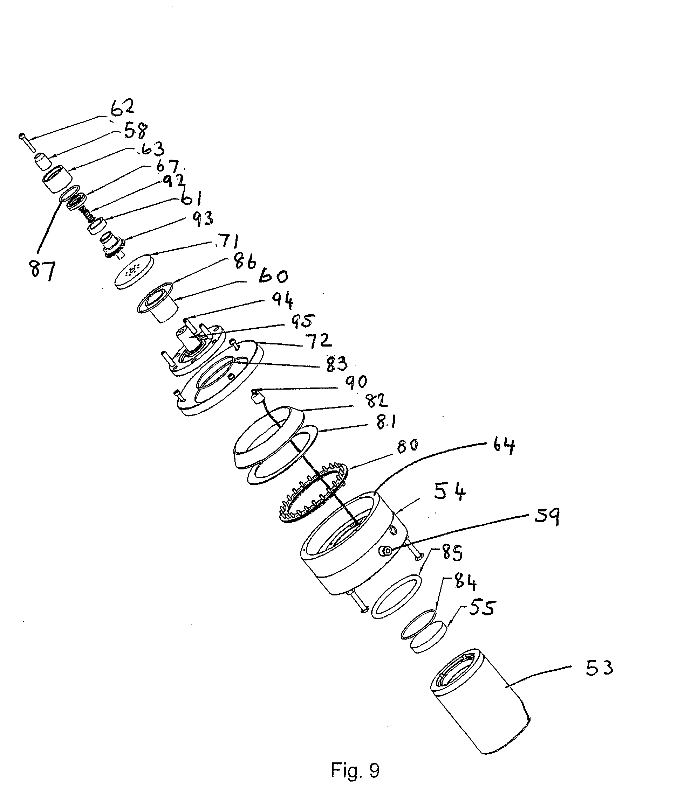

Referring to Figs. 5 to 9 the imaging apparatus 51 is illustrated. The apparatus comprises a bottom section 53 and a top section 54. The top section 54 comprises a holder 65 for supporting a disc 2 without occluding the disc identifier and the bottom section 53 contains a camera 57 facing upwardly for acquiring an image of the identifier.

The holder 65 comprises a vacuum disc holding system comprising a disc support in the form of a support ring 66 which comprises a vacuum cup 67 and a chamber 61 from which a vacuum is applied to the cup 67 through conduits 69 and 70. A centering spindle 58 is provided to centre a disc in relation to field of view of the camera 55. The centering spindle 58 is shaped for correspondence with the hole in centre of the disc and receives a disc by engaging that hole. The upper side edge of the spindle 58 is chamfered to assist in receiving a disc. In use a disc 2 is supported on the vacuum cup 67 of the disc support ring 66 with the centering spindle engaging the central hole and the outside edge of the disc contacting the tapered edge 64 of the disc holder 65.

The centering spindle 58 comprises a spindle shaft 62, a spindle mounting block 93, and a spindle centre spring 92 mounted in a spindle housing 63. As the centering spindle 58 is resiliently mounted it absorbs the shock of a disc being placed thereon and the resilient movement also assists in centering the disc. The disc support ring 66 and vacuum cup 67 which contact the disc are comprised of a soft material, for example a plastics material, to reduce the effects of any shocks to the disc when being loaded onto the support and to avoid damage to discs.

If a disc 2 presented to the support is not positioned correctly in relation to the centering spindle 58 then contact between the disc and the centering spindle will cause the spindle to move down by virtue of its resilience. This movement assists in positioning and centering a disc 2 on the spindle 58.

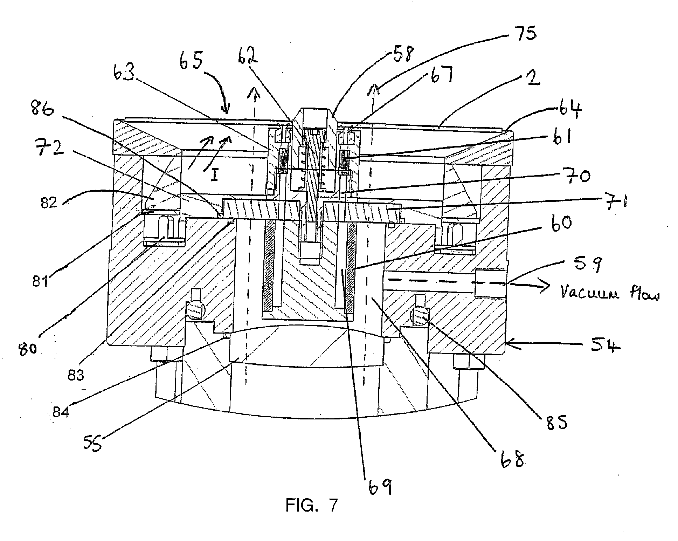

The extent of the optical field of view of the camera 55 at the identifier of the disc 2 is indicated by dashed lines 75 in Fig. 7. The disc 2 is supported on the centering spindle 58 of the imaging apparatus 51. The identifier of the disc may be located in any location and orientation within an annular area outside of the spindle 58, generally in the region indicated by the field of view 75. This annular area 75 is kept clear as the identifier can be at any location and in any orientation in this annular area 75. The data area of the disc 2 is from just outside this annular area 75 to within 2mm from the outer edge of the disc. To avoid damage to the data surface no components of the head or handling system come into contact with the data area. The outer edge of the disc is supported against the tapered edge of the disc support 64 of the holder 65. The inner portion of the disc is support on the support ring 66.

The vacuum chamber 68 comprises a top 71 and a bottom 55 which are both of glass or a material with similar optical properties. Thus, the vacuum chamber 68 does not occlude the optical field of view 75. In this case the top 71 is a glass plate and the bottom is defined by the field lens 55. The glass plate 71 is supported in a retaining ring 72.

A side port 59 is used to pull a vacuum in the chamber 68. Various O-rings 83, 84, 85, 86 and 87 are used to seal the chamber 68. The vacuum is ported through conduits 69 and 70 in the spindle components up to the vacuum cup 67 in the support ring 66. A filter 61 is provided below the vacuum cup 67 to prevent particles being drawn into the optical space which is therefore kept clear. A further filter 60 is provided between the vacuum chamber 68 and conduit 69. The chamber filter 60 is supported on a chamber filter spool 95. Dust blow turrets 94 are provided in proximity to the chamber filter spool 95. The dust blow turrets 94 blow dust off the glass plate. They are activated after every failed reading attempt or one every 100 discs, whichever occurs first.

The air pathway in the apparatus 51 is as follows. Air enters through holes in the vacuum cup 67 of the support ring 66, through the filter 61, the conduits 70 and 69, the filter 60 and the vacuum chamber 68 and the side port 59.

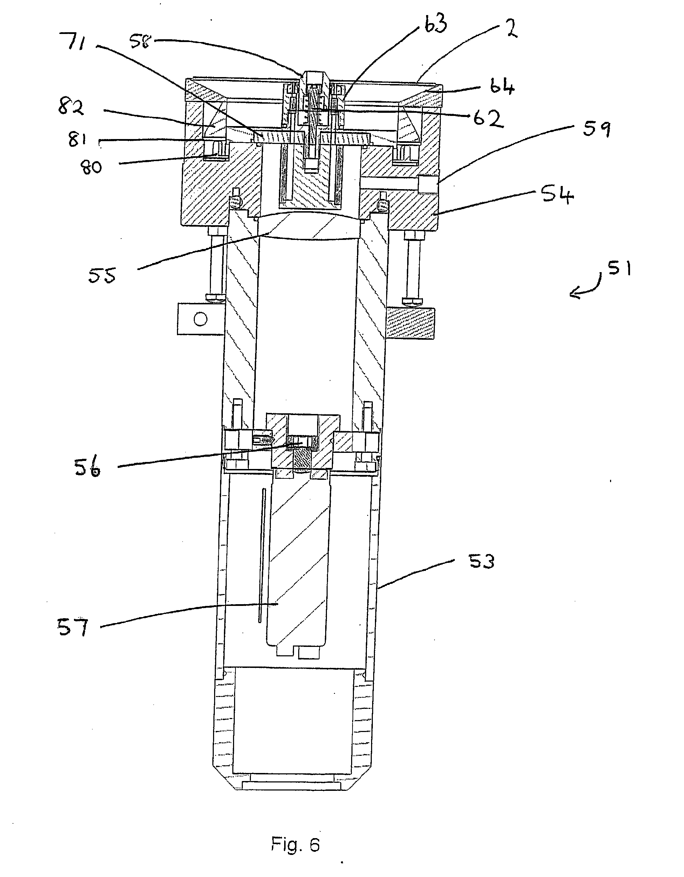

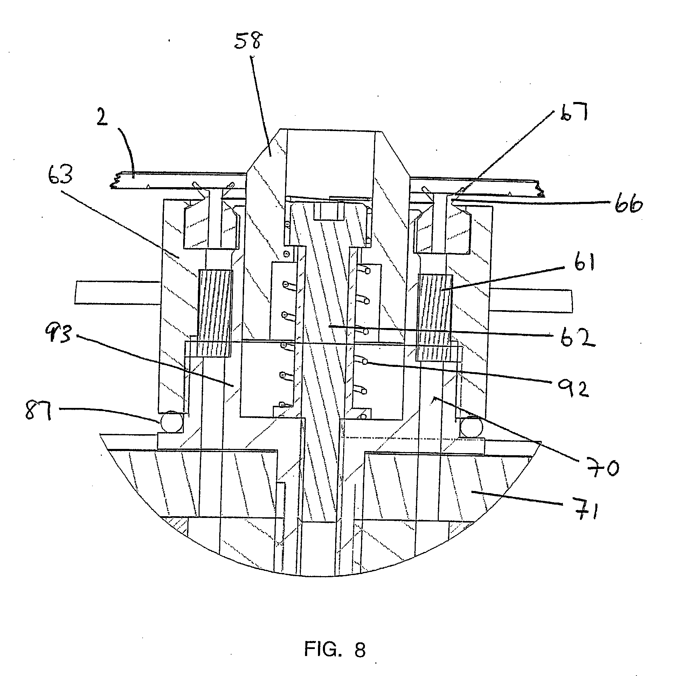

In the apparatus a vacuum chamber is defined between two glass components which do not occlude the optical path as shown in Figs. 6 and 8 the camera 57 has a clear field of view 75 at the object i.e. the mirror band of the disc 2.

The apparatus reduces the time for settling and stabilisation of the disc after a mechanical handling system drops a disc 2 onto the spindle 58. The vacuum serves to stabilise the disc and reduce or eliminate vibrations. As the disc is stabilised the system provides for blur free imaging. It enables a disc to be identified extremely quickly and efficiently so that the speed of operation and throughput of a disc manufacturing system can be optimised.

The imaging apparatus further comprises an annular lighting array 80, a diffuser 81 and a light guide lens 82 for providing diffuse illumination directed at the object to be imaged. The field lens 55 focuses the image of the object at the camera 53.

The imaging apparatus also comprises detectors 90 and 91 (not shown). The detector 90 is an optical detector which serves to detect when a disc has been placed correctly on the disc support. The detector 91 is a pressure sensor which serves to detect when vacuum has been achieved. When the detector 90 triggers operation of the vacuum. The detector 91 triggers operation of the illumination system and camera.

The imaging apparatus may be installed in any disc handling line for example a disc handling line of Fig. 1. A typical sequence of events in placing a disc on the imaging apparatus 51 and reading a disc using the apparatus 51 is as follows:
Step 1. A disc 2 is presented by a disc handling system for placement on the imaging apparatus 51.
Step 2. The disc is received and centred on the spindle 58. The spindle which is resilient is self levelling and the movement of the spindle assists placement of the disc.
Step 3. When the disc is received in place on the spindle 58 a "disc in place sensor" 90 triggers activation of the vacuum. The "disc in place sensor" 90 is an optical sensor. The disc sensor is not activated unless the disc 2 is correctly in position on the centering spindle 58.
Step 4. When the vacuum is activated a suction is applied to the underside of the disc at the vacuum cups 67 on the support rings 66. The effect of the vacuum is to stabilise the disc and to eliminate vibrations of the disc ensuring that it is held steady for imaging so that there will be no blurring or interference in the captured image due to movement of the disc.
Step 5. A pressure sensor detects when vacuum is achieved and triggers the camera to acquire an image of the disc. The pressure sensor also triggers activation of the lighting array to illuminate the object area at the same time as the camera is triggered to capture an image of the object.
Step 6. After an image has been acquired, the disc is removed from the imaging apparatus and depending on the outcome of the disc imaging and disc identification operations is either passed or, rejected. If rejected it is removed from the batch of discs being processed and possibly destroyed.

The disc identification system has the advantage that it does not require prior knowledge of the disc format and identifier code before attempting to read the disc. Instead it comprises the capability to automatically reconfigure the imaging parameters according to the characteristics of a disc that is to be read, as and when the need arises. The present system is not therefore limited, for the duration of the production run, to read only that type of disc and disc identifier that it has been specifically configured to read at the start of a production run.

The system also has the advantage that it is capable of differentiating between true contamination, for example presence of a disc with an invalid identifier, and scan failures for example due to an imaging apparatus or scanner error or manufacturing error. The system is also capable of reading and decoding an identifier which is different from the one that the reader has been configured to read and thus does not unnecessarily reject discs if they bear an alternative valid identifier code. Instead by a process of reinitialisation and resetting the imaging parameters the disc identification system is able to read and decode the identifier and further determine if that identifier signifies contamination of the batch of discs.

This is an advantage from the manufacturer's point of view as it is important to be able to know when a true contamination has occurred to enable review of their process and security procedures.

The fully automated and real-time initialisation of the identification system provides excellent flexibility. There is no requirement, as with prior art systems to input the relevant disc identifier codes for each production run in to the system prior to the production run as such may be added at initialisation or during the run.

The disc identification system does not require prior knowledge of the optical medium to perform identification since it re-initialises to enable reading all necessary system parameters are set as required. The system does not need to know the format of the identifier since it will check for barcode and alphanumeric codes automatically.

The disc imaging apparatus of the invention provides a fast, efficient and secure means for handling discs and provides for improved imaging results. By virtue of design of the imaging head damage to discs is limited. The resilient nature of the centering spindle avoids the problem of shocks being transmitted to discs or the imaging head during the process of transferring discs to the spindle. The disc imaging apparatus of the invention also provides for an increased throughput of discs since the centering spindle assists in ensuring that discs are correctly positioned in relation to the camera and the vacuum arrangement reduces the time required for a disc to settle on the head.

The centering spindle and vacuum together provide an improved system for imaging discs. The centering spindle ensures that the disc is positioned correctly in relation to the camera while the vacuum provides for stability of the disc that is being imaged so that blurring or other interference is reduced or eliminated.

The invention is not limited to the embodiments hereinbefore described which may be varied in detail.

## Claims

1. An optical medium identification system for identifying an optical medium comprising:
- an imaging apparatus (11, 51) for acquiring an image of an identifier of the optical medium, and
- an image processing system (12).

2. An optical medium identification system as claimed in claim 1, wherein the image processing system (12) comprises a function for decoding the identifier.

3. An optical medium identification system as claimed in claims 1 or 2, wherein the image processing system comprises a database (15) for storing optical medium identifiers including a list of valid optical medium identifiers, and a function for comparing an identifier of an optical medium with the identifiers stored in the database (15).

4. An optical medium identification system as claimed in claim 3, wherein the image processing system comprises a user interface (18), a function for passing a medium identifier not matched in the database to the interface for output to a user, and a function for rejecting the medium if the user interface does not receive a user verification input for the identifier.

5. An optical medium identification system as claimed in any of claims 3 or 4, wherein the database comprises at least two indexes, and a search function attempts to match a medium identifier using the indexes in succession and terminates a search if a match is found before using all indexes.

6. An optical medium identification system as claimed in any preceding claim, wherein the image processing system comprises a function for automatically setting operating parameters during an initialisation stage using a sample optical medium identifier.

7. An optical medium identification system as claimed in claim 6, wherein said function determines said operating parameters from data read from an optical medium sample of the batch.

8. An optical medium identification system as claimed in claim 6, wherein the image processing system comprises functions for locating the centre of an optical medium, for adjusting the imaging apparatus brightness and contrast, for detecting an optical medium identifier, and for detecting the radius of the identifier.

9. An optical medium identification system as claimed in claims 6 to 8, wherein the image processing system automatically re-initialises and the operating parameters are adjusted using a current optical medium as an initialisation sample if the system encounters difficulty in reading the identifier of the current optical medium using the current operating parameters.

10. An optical medium identification system as claimed in any preceding claim, wherein the imaging apparatus comprises a holder for supporting the optical medium without occluding the identifier and a camera for acquiring an image of the identifier.

11. An optical medium identification system as claimed in claim 10, wherein the holder comprises a vacuum holding system.

12. An optical medium identification system as claimed in claim 11, wherein the vacuum holding system comprises an optical medium support and a chamber from which a vacuum is applied to the optical medium support

13. An optical medium identification system as claimed in claim 12, wherein the chamber located between the optical medium support and the camera does not occlude the field of view of the camera at the optical medium identifier.

14. An optical medium identification system as claimed in claims 12 or 13 wherein the optical medium support is a vacuum cup.

15. An optical medium identification system as claimed in claim 14 wherein the vacuum cup is engageable with a centre section of an optical medium.

16. An optical medium identification system as claimed in claim 14 or 15 wherein the vacuum cup is an annular cup.

17. An optical medium identification system as claimed in any of claims 14 to 16 wherein the vacuum cup defines a central opening for a spindle.

18. An optical medium identification system as claimed in any of claims 12 to 17 wherein the chamber does not occlude an optical path between the camera and the optical medium identifier.

19. An optical medium identification system as claimed in claim 18 wherein the chamber comprises top and bottom walls of glass or other material transparent to the camera detection wavelength.

20. An optical medium identification system as claimed in any of claims 12 to 19 wherein the chamber is an annular chamber.

21. An optical medium identification system as claimed in any of claims 12 to 20 comprising conduits communicating between the chamber and the optical medium support and the conduits being located outside of the optical path.

22. A method for identifying an optical medium or optical medium, comprising the steps of:
- acquiring an image of an identifier of an optical medium
- reading the identifier
- checking the validity of the identifier.

23. A method as claimed in claim 22 wherein checking the validity of the identifier comprises the step of comparing the identifier with a database (15) of identifier data.

24. A method as claimed in claim 23 wherein checking the validity of the identifier comprises the step of presenting the identifier at a user interface (18) for review by an operator, and rejecting the medium if the user interface does not receive a verification input for the identifier.

25. A method as claimed in claim 24 wherein the optical medium has an inner mirror band and the identifier is located on the mirror band and the method further comprises the steps of:
- locating the centre of the optical medium,
- locating the inner mirror band,
- locating the identifier, and
- locating the radius of the identifier.

26. A method as claimed in claim 25 further comprising the step of adjusting the parameters of the imaging apparatus to optimise the image of the identifier.

27. A method as claimed in claim 26, wherein content of the inner mirror band is scanned and the gain and offset of the incoming video signal is adjusted to optimise the contrast of the image and the content of the inner mirror band is scanned and the exposure time of the image sensor is adjusted to optimise the contrast of the image.

28. Apparatus for acquiring an image of an identifier of an optical medium, the apparatus comprising a holder for supporting the optical medium without occluding the identifier and a camera for acquiring an image of the identifier.

29. Apparatus as claimed in claim 28 wherein the holder comprises a vacuum holding system.

30. Apparatus as claimed in claim 29 wherein the vacuum holding system comprises an optical medium support and a chamber from which a vacuum is applied to the optical medium support

31. Apparatus as claimed in claim 30, wherein the chamber located between the optical medium support and the camera does not occlude the field of view of the camera at the optical medium identifier.

32. Apparatus as claimed in claims 29 or 30 wherein the optical medium support is a vacuum cup.

33. Apparatus as claimed in claim 32 wherein the vacuum cup is engageable with a centre section of an optical medium.

34. Apparatus as claimed in claim 32 or 33 wherein the vacuum cup is an annular cup.

35. Apparatus as claimed in any of claims 30 to 34 wherein the vacuum cup defines a central opening for a spindle.

36. Apparatus as claimed in any of claims 30 to 35 wherein the chamber does not occlude an optical path between the camera and the optical medium identifier.

37. Apparatus as claimed in any of claims 30 to 36 wherein the chamber comprises top and bottom walls of glass or other material transparent to the camera detection wavelength.

38. Apparatus as claimed in any of claims 30 to 37 wherein the chamber is an annular chamber.

39. Apparatus as claimed in any of claims 30 to 38 comprising conduits communicating between the chamber and the optical medium support said conduits being located outside of the optical path.
